# EUROPEAN PATENT SPECIFICATION

(11) **EP 4 203 104 B1**
(45) Date of publication and mention of the grant of the patent: **04.06.2025**
(21) Application number: 21928342.1
(22) Date of filing: 13.10.2021
(51) Int. Cl.: H01M 10/0567, H01M 4/131, H01M 4/62, H01M 4/02, H01M 4/505, H01M 10/052

(54) **SECONDARY BATTERY, BATTERY MODULE, BATTERY PACK AND ELECTRICAL APPARATUS HAVING SAME**
SEKUNDÄRBATTERIE, BATTERIEMODUL, BATTERIEPACK UND ENERGIEVERBRAUCHSGERÄT
BATTERIE SECONDAIRE, MODULE DE BATTERIE, BLOC-BATTERIE ET APPAREIL ÉLECTRIQUE LE COMPRENANT

(43) Date of publication of application: 28.06.2023
(73) Proprietor: Contemporary Amperex Technology (Hong Kong) Limited, Central, Central And Western District (HK)
(72) Inventor: ZOU, Hailin, Ningde City, Fujian 352100 (CN); CHEN, Peipei, Ningde City, Fujian 352100 (CN); ZHANG, Limei, Ningde City, Fujian 352100 (CN)
(74) Representative: Gong, Jinping
(86) International application number: PCT/CN2021/123430
(87) International publication number: WO 2023/060462

(56) References cited:
- CN-A- 103 531 783
- CN-A- 105 428 621
- CN-A- 113 471 411
- JP-A- H07 272 765
- US-B1- 6 183 911
- US-B2- 10 439 210
- YUAN MIN: "Na+ and Fe3+ Co Doped cathode materials with high electrochemical performances", INTERNATIONAL JOURNAL OF ELECTROCHEMICAL SCIENCE, 1 August 2018 (2018-08-01), pages 7545 - 7557, XP093038800, DOI: 10.20964/2018.08.29
- KAREN PAVEL ET AL: "Comprehensive definition of oxidation state (IUPAC Recommendations 2016)", PURE & APPLIED CHEMISTRY, vol. 88, no. 8, 1 August 2016 (2016-08-01), GB, pages 831 - 839, XP093031160, ISSN: 0033-4545, Retrieved from the Internet <URL:http://dx.doi.org/10.1515/pac-2015-1204> DOI: 10.1515/pac-2015-1204
- N.N.: "HOW TO MAKE A COIN CELL", 30 September 2020 (2020-09-30), XP093092327, Retrieved from the Internet <URL:https://web.archive.org/web/20200930094141/https://www.cei.washington.edu/education/science-of-solar/how-to-make-a-coin-cell/> [retrieved on 20231017]

## Description

### TECHNICAL FIELD

The present application relates to the field of electrochemistry, and in particular, to a secondary battery as specified in any of the claims 1-4, a battery module as specified in claim 5, a battery pack as specified in claim 6, and a power consumption apparatus as specified in claim 7.

### BACKGROUND

With the rapid development of the new energy field, lithium ion-batteries are widely applied to the field of new energy vehicles, such as full electric vehicles and hybrid electric vehicles, due to the advantages of their excellent electrochemical performance, no memory effect and low environmental pollution.

A lithium-ion battery prepared from a positive material containing a lithium manganese oxide, such as a lithium manganate lithium-ion battery, generally has a problem of serious dissolution of a transition metal manganese, which results in a poor storage life of the battery and thus cannot meet the needs of consumers.

Further, it is more difficult to make the lithium manganate battery take into account good storage life while having high energy density.
JPH07272765A describes nonaqueous electrolytic secondary battery and its manufacture. XP93038800AI relates to Na+ and Fe3+ Co Doped cathode materials with high electrochemical performances. US6183911 B1 mentions a positive active material for rechargeable lithium batteries

### SUMMARY

The present application is made in view of the foregoing problem, the objective is to provide lithium-ion battery as specified in any of the claims 1-4, including the electrode sheet and combining an electrolytic solution in a specific formula, and the lithium-ion battery takes into account both high energy density and a good storage life.

In a first aspect of the present application, a lithium-ion battery as specified in any of the claims 1-4, comprising a positive electrode sheet is provided, wherein the positive electrode sheet including:
a current collector and a positive film layer provided on at least one surface of the current collector, the positive film layer including a lithium manganese oxide in which a trivalent manganese element and a tetravalent manganese element coexist and a high-oxidizability additive, and the high-oxidizability additive being used to oxidize Mn²⁺ to Mn³⁺ and/or Mn⁴⁺.

In any implementation manner, in the positive electrode sheet, a structural formula of the lithium manganese oxide is Li_{8-3a-4b-3c}(Mn³⁺)ₐ(N³⁺)_{c}(Mn⁴⁺)_{b}O₄, c≥0, a>0, b≥0, N is selected from one or more of B, Al, Ga, In, TI and Fe, and a ratio of an atom number of the trivalent manganese element to an atom number of the tetravalent manganese element is α;
a mass content of the high-oxidizability additive in the positive film layer is β%; and
the α and the β satisfy 0.01≤β/α≤10, optionally, 0.5≤β/α≤5.

In any implementation manner, a value of α satisfies 0.5≤α≤1.2, optionally, 0.6≤α≤1.

In any implementation manner, a value of β satisfies 0.01≤β≤10, optionally, 0.5≤β≤5.

In any implementation manner, the high-oxidizability additive in the positive electrode sheet is one or more of Li₂O₂, Na₂O₂, K₂O₂, CrO₃, V₂O₅ and NiOₓ (x>1.5, a valence of Ni is +4), optionally, NiOₓ (x>1.5).

In any implementation manner, the high-oxidizability additive is irreversible L₂NiO₂, or the high-oxidizability additive is an irreversible composite metal oxide formed by doping an element M into the L₂NiO₂, M is one or more of Cu, Fe, Co and Ni, L is one or more of Li, Na and K, and a valence of the Ni is +2; where,
the "irreversible" refers to: in the high-oxidizability additive containing a divalent nickel element, a nickel element whose valence is less than +4 is oxidized to a tetravalent nickel element in a first charging process of a secondary battery prepared from the positive electrode sheet, and the tetravalent nickel element always exists in subsequent charging and discharging processes.

In aspect of the present application, the secondary battery as specified in any of the claims 1-4 is provided, including: a negative electrode sheet, a separator, the positive electrode sheet in the first aspect of the present application, and an electrolytic solution, where the electrolytic solution includes a low-impedance additive, and a mass content w% of the low-impedance additive in the electrolytic solution and a mass content β% of the high-oxidizability additive in the positive film layer satisfy 0.1≤w/β≤10, optionally, 2≤w/β≤5.

In any implementation manner, a value of w satisfies 0.01≤w≤10, optionally, 0.5≤w≤5.

In any implementation manner, the low-impedance additive in the electrolytic solution is fluorosulfonate and/or difluorophosphate,
the fluorosulfonate is (FSO₃)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺; and
the difluorophosphate is (F₂PO₂)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺.

In another aspect of the present application, a battery module as specified in claim 5 is provided, including the lithium-ion battery in the second aspect of the present application. The method for producing a battery module known in the prior art can be used for the production of the battery module.

In anotheraspect of the present application, a battery pack as specified in claim 6 is provided, including one or more of the lithium-ion battery in the second aspect of the present application or the battery module in the third aspect of the present application. The method for producing a battery pack known in the prior art can be used for the production of the battery pack.

In anotheraspect of the present application, a power consumption apparatus as specified in claim 7 is provided, including one or more of the lithium-ion battery in the second aspect of the present application, the battery module in the third aspect of the present application or the battery pack as specified in claim 6 in the fourth aspect of the present application, the lithium-ion battery or the battery module or the battery pack being used as a power source of the power consumption apparatus or an energy storage unit of the power consumption apparatus. The method for producing a power consumption apparatus known in the prior art can be used for the production of the power consumption apparatus.

### [BENEFICIAL EFFECT]

According to the present application, by comprehensively regulating relative contents of a trivalent manganese element and a tetravalent manganese element in a lithium manganate material, further optimizing components of a positive film layer and combining an electrolytic solution in a specific formula, and by exploring internal relationships and action mechanisms of the foregoing three aspects and taking advantage of synergistic effects of the foregoing three aspects, a deposition amount of a transition metal manganese on a surface of a negative electrode of a lithium-ion battery is significantly reduced, energy density and storage life of the lithium-ion battery are significantly increased, and there is no loss of power performance of the battery due to the increase of the energy density and a storage life according to the technical solutions of the present application.

The battery module, the battery pack, and the power consumption apparatus of the present application include the lithium-ion battery provided in the present application, and thus have at least the same advantages as the lithium-ion battery.

### BRIEF DESCRIPTION OF THE DRAWINGS

FIG. 1 is a schematic diagram of a lithium-ion battery according to an implementation manner of the present application.
FIG. 2 is an exploded view of the lithium-ion battery according to the implementation manner of the present application shown in FIG. 1.
FIG. 3 is a schematic diagram of a battery module according to an implementation manner of the present application.
FIG. 4 is a schematic diagram of a battery pack according to an implementation manner of the present application.
FIG. 5 is an exploded view of the battery pack according to the implementation manner of the present application shown in FIG. 4.
FIG. 6 is a schematic diagram of a power consumption apparatus according to an implementation manner of the present application.

### DESCRIPTION OF REFERENCE SIGNS

1 battery pack
2 upper box body
3 lower box body
4 battery module
5 lithium-ion battery
51 housing
52 electrode assembly
53 top cover assembly

### DESCRIPTION OF EMBODIMENTS

Implementation manners that specifically disclose a positive active material and a method for preparing the same, a positive electrode sheet, a secondary battery, a battery module, a battery pack and an electrical apparatus of the present application will be described below in detail with reference to the accompanying drawings as appropriate. However, unnecessarily detailed descriptions may be omitted in some cases. For example, detailed description for a well-known matter and repeated description for a practically identical structure are omitted. This is done to avoid unnecessarily redundant descriptions for ease of understanding by persons skilled in the art. In addition, the drawings and the following description are provided for persons skilled in the art to fully appreciate the present application, and are not intended to limit the subject matters described in the claims.

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all implementation manners and optional implementation manners of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, but preferably, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

The inventor of the present application found: a lithium manganese oxide is used as a positive material, such as lithium manganate, and the element manganese in its bulk phase exists in two valence states of +3 and +4, where a content of +3 manganese element is proportional to a specific capacity of the positive material of lithium manganate, and thus the higher the content of +3 manganese element in the positive material of lithium manganate, the higher the specific capacity of the positive material of lithium manganate. However, the higher the content of +3 manganese element, the more transition metal ions Mn³⁺ are dissolved out from a lithium manganate crystal structure, and the dissolved Mn³⁺ undergoes a disproportionation reaction to generate soluble Mn²⁺, so that an irreversible phase transformation occurs on the positive material. Meanwhile, the soluble Mn²⁺ migrates from a positive electrode to a negative electrode, and is deposited on the negative electrode, thereby destroying the electronic insulation characteristic of a negative SEI. When the electronic insulation characteristic of the SEI film is destroyed, an electrolytic solution undergoes side reactions continuously on a surface of the negative electrode and active lithium in the electrolytic solution are consumed continuously, resulting in a significant reduction of a storage life of the positive material of lithium manganate.

Particularly, the inventor found that the storage life of the lithium manganate battery is poor when the battery is in a low state of charge, for example, an open-circuit voltage is 3.8V.

Particularly, the inventor found that the storage life of the lithium manganate battery is poor when energy density of the battery is increased by increasing the content of +3 manganese element in the positive material of lithium manganate.

In the face of the foregoing greatly difficult research problem, the inventor of the present application starts from the comprehensive improvement of comprehensive performance of the lithium manganate battery, and develops a lithium-ion battery that can comprehensively increase the energy density and storage life of the battery through modification of the lithium manganate material, modification of a positive electrode sheet and synergistic collocation of an electrolytic solution in a specific formula.

### [POSITIVE ELECTRODE SHEET]

A positive electrode sheet includes a positive electrode current collector and a positive film layer provided on at least one surface of the positive electrode current collector.

As an example, the positive electrode current collector has two surfaces opposite in its own thickness direction, and the positive film layer is provided on either or both of the two opposite surfaces of the positive electrode current collector.

In some implementation manners, the positive electrode current collector may be metal foil or a composite current collector. For example, as the metal foil, aluminum foil can be used. The composite current collector may include a polymer material base layer and a metal layer formed on at least one surface of the polymer material base layer. The composite current collector may be formed by synthesizing a metal material (aluminum, aluminum alloy, nickel, nickel alloy, titanium, titanium alloy, silver and silver alloy, or the like) on a polymer material substrate (such as a substrate of polypropylene (PP), polyethylene glycol terephthalate (PET), polybutylene terephthalate (PBT), polystyrene (PS), polyethylene (PE), or the like).

The present application provides a positive electrode sheet, which includes:
a current collector and a positive film layer provided on at least one surface of the current collector, the positive film layer including a lithium manganese oxide in which a trivalent manganese element and a tetravalent manganese element coexist and a high-oxidizability additive, and the high-oxidizability additive being used to oxidize Mn²⁺ to Mn³⁺ and/or Mn⁴⁺.

However, through a lot of research, the inventor found that, in a complex electrochemical environment, by adding the high-oxidizability additive of the present application to a positive film layer and using the high oxidizing effect of the high-oxidizability additive on a low-valence manganese element, on the one hand, dissolution of a transition metal of the lithium-ion battery can be significantly inhibited during a storage process, so as to significantly increase the storage life of the lithium-ion battery; and on the other hand, the high-oxidizability additive in the positive film layer can oxidize Mn²⁺ in the positive film layer to Mn³⁺ and/or Mn⁴⁺, which remains in the positive film layer to function. Particularly, when Mn²⁺ is oxidized to Mn³⁺ by controlling an amount of the high-oxidizability additive added or by other feasible means, specific energy of a positive material is significantly increased, and thus the energy density of the lithium-ion battery is significantly increased. Meanwhile, since the amount of Mn²⁺ in the positive film layer is significantly reduced, the storage life of the lithium-ion battery is significantly increased.

It should be noted that the lithium manganese oxide refers to an oxide containing three elements of lithium, manganese and oxygen, such as LiMnO₂, LiMn₂O₄, LiMnPO₄, lithium manganese iron phosphate, a composite material of lithium manganese phosphate and carbon, or a composite material of lithium manganese iron phosphate and carbon.

In some implementation manners, optionally, in the positive electrode sheet of the present application, a structural formula of the lithium manganese oxide is Li_{8-3a-4b-3c}(Mn³⁺)ₐ(N³⁺)_{c}(Mn⁴⁺)_{b}O₄, c≥0, a>0, b≥0, N is selected from one or more of B, Al, Ga, In, TI and Fe, and a ratio of an atom number of the trivalent manganese element to an atom number of the tetravalent manganese element is α;
a mass content of the high-oxidizability additive in the positive film layer is β%; and
the α and the β satisfy 0.01≤β/α≤10, optionally, 0.5≤β/α≤5.

In the lithium manganese oxide of the present application, a positive material Li_{8-3a-4b-3c}(Mn³⁺)ₐ(N³⁺)_{c}(Mn⁴⁺)_{b}O₄ of a lithium manganate system is preferred. A trivalent manganese element in the lithium manganate system is electrochemically active, and a content of the trivalent manganese element in a lithium manganate bulk phase determines a specific capacity of lithium manganate, and further affects the energy density of the lithium-ion battery. However, the higher the content of the trivalent manganese element in the lithium manganate bulk phase, the more serious the dissolution of Mn²⁺, and the worse the storage life of the lithium-ion battery. Therefore, the lithium-ion battery in which lithium manganate is used as the positive material can not take into account both the energy density and the storage life.

Through a lot of experiments, the inventor of the present application found that, when the α and the β satisfy 0.01≤β/α≤10, the dissolution of Mn²⁺ in the lithium manganate lithium-ion battery is more significantly improved, and the energy density and the storage life are significantly increased.

It should be noted that, the content of the trivalent manganese element in the lithium manganate bulk phase may be represented by a ratio α of the trivalent manganese element in the lithium manganate bulk phase to the tetravalent manganese element in the lithium manganate bulk phase, the numerical value of α can represent the degree of difficulty and the quantity of dissolution of Mn²⁺ in a lithium manganate material (when the high-oxidizability additive of the present application is not included), and also represent a specific capacity that the lithium manganate material can contribute to.

In the present application, for the ratio α, the control of a sintering process in a preparation process for the lithium manganate material, the introduction of a doping element and the like can be used as available means to adjust the ratio α, thereby obtaining lithium manganate materials with different specific capacities. For example, by controlling the sintering process, for example, regulating the sintering time and sintering temperature, a lithium manganate material Li_{1.1}Mn³⁺_{1.1}Mn⁴⁺_{0.9}O₄ can be obtained, and in this case, α=1.22. For example, by doping a trivalent metal element Al, Ga, In, TI, Fe, or the like through the principle of homovalent substitution, a lithium manganate material LiMn³⁺_{0.9}Al_{0.1}Mn⁴⁺O₄ can be obtained, and in this case, α=0.9.

It can be appreciated that the higher the content of the trivalent manganese element in the lithium manganate material, that is, the greater the α, the more the amount of the high-oxidizability additive required, that is, the greater the β, and thus the β is proportional to the α. However, the high-oxidizability additive in the positive film layer does not contribute to the capacity but the positive impedance deteriorates, and thus it cannot be added excessively. Through a lot of experiments, the inventor of the present application found: when the α and the β further satisfy 0.5≤β/α≤5, the energy density and the storage life of the lithium manganate lithium-ion battery are further increased.

In some implementation manners, a value of α satisfies 0.5≤α≤1.2, optionally, 0.6≤α≤1.

In some implementation manners, a value of β satisfies 0.01≤β≤10, optionally, 0.5≤β≤5.

In some implementation manners, the high-oxidizability additive in the positive electrode sheet is one or more of Li₂O₂, Na₂O₂, K₂O₂, CrO₃, V₂O₅, a nickel-containing oxide NiOₓ (x>1.5, a valence of Ni is +4), optionally, NiOₓ (x>1.5).

In some implementation manners, the high-oxidizability additive in the positive electrode sheet is irreversible L₂NiO₂, or the high-oxidizability additive is an irreversible composite metal oxide formed by doping an element M into the L₂NiO₂, M is one or more of Cu, Fe, Co and Ni, L is one or more of Li, Na and K, and a valence of the Ni is +2; where,
the "irreversible" refers to: in the high-oxidizability additive containing a divalent nickel element, a nickel element whose valence is less than +4 is oxidized to a tetravalent nickel element in a first charging process of a secondary battery prepared from the positive electrode sheet, and the tetravalent nickel element always exists in subsequent charging and discharging processes.

The inventor of the present application found: in the high-oxidizability additive containing a divalent nickel element, an alkali metal element with a small ionic radius is deintercalated in the form of ions in the first charging process, in order to maintain the charge balance of the high-oxidizability additive after the alkali metal element is deintercalated, the nickel element whose valence is less than +4 is oxidized to a tetravalent nickel element; and after the alkali metal element is deintercelated in the form of ions, it cannot be intercalated back with the discharging process, so that the tetravalent nickel element always exists in the charging and discharging processes of the lithium-ion battery, to oxidize Mn²⁺ generated in the positive film layer to Mn⁴⁺.

It has been reported in the prior art that, a surface of a lithium manganate material is coated with a nickel cobalt manganese oxide material and a nickel manganese spinel material; the nickel cobalt manganese oxide material and the nickel manganese spinel material undergo delithiation to form Ni⁴⁺ at a voltage above 4V, and both of them reduce Ni⁴⁺ to form Ni in a low valence state at a voltage about 3.8V with the process of lithiation, losing the capability of oxidizing Mn²⁺; and Mn²⁺ still dissolves and migrates in an electrolytic solution. Therefore, this method of coating lithium manganate with the nickel cobalt manganese oxide material and the nickel manganese spinel material cannot solve the problem of the storage life of the lithium manganate in a low state of charge of 3.8V. However, the technical solutions of the present application can avoid the foregoing defects, and can inhibit and transform the dissolution of a transition metal manganese effectively, continuously and stably. The possible mechanism of an action of the high-oxidizability additive of the present application in the positive film layer is as follows.

In an example of NiOₓ (x>1.5), stable Ni⁴⁺ can be introduced into the positive film layer, so that there is still sufficient Ni⁴⁺ to oxidize Mn²⁺ even in a low state of charge (such as 3.8V), and the dissolution and migration of Mn²⁺ in the electrolytic solution are inhibited, thereby effectively solving the problem of the storage life of lithium manganate in the low state of charge. It should be noted: when Mn²⁺ is oxidized to Mn³⁺, Mn³⁺ obtained after the oxidation may migrate to the defect of the positive material and continue to contribute to the specific capacity of the positive material; and when Mn²⁺ is oxidized to Mn⁴⁺, the formed Mn⁴⁺ is deposited around NiOₓ (x>1.5) in the form of a protective layer since Mn⁴⁺ is insoluble in the electrolytic solution, to prevent excessive oxidation of (ₓ>1.5) to the electrolytic solution.

In an example of Na₂NiFeO₄, it contains a divalent nickel element, an alkali metal element sodium with a small ionic radius is deintercalated in the form of ions in the first charging process, in order to maintain the charge balance of the high-oxidizability additive after the alkali metal element is deintercalated, the nickel element whose valence is less than +4 is oxidized to a tetravalent nickel element; and after the alkali metal element is deintercelated in the form of ions, it cannot be intercalated back with the discharging process, so that the tetravalent nickel element always exists in the charging and discharging processes of the lithium-ion battery, to oxidize Mn²⁺ generated in the positive film layer to Mn⁴⁺.

In some implementation manners, the positive film layer further optionally includes a binder. As an example, the binder may include at least one of a polyvinylidene fluoride (PVDF), a polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine-containing acrylate resin.

In some implementation manners, the positive film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementation manners, the positive electrode sheet may be prepared by the following means: the foregoing components for preparing a positive electrode sheet, such as a positive active material, a conductive agent, a binder and any other components, are dispersed in a solvent (such as N-methylpyrrolidone) to form a positive electrode slurry; and the positive electrode slurry is coated on a positive electrode current collector, and the positive electrode sheet can be obtained after processes of drying, cold pressing, and the like,.

### [NEGATIVE ELECTRODE SHEET]

A negative electrode sheet includes a negative electrode current collector and a negative film layer provided on at least one surface of the negative electrode current collector, and the negative film layer includes a negative active material.

As an example, the negative electrode current collector has two surfaces opposite in its own thickness direction, and the negative film layer is provided on either or both of the two opposite surfaces of the negative electrode current collector.

In the lithium-ion battery of the present application, the negative electrode current collector may be metal foil or a composite current collector. For example, as the metal foil, copper foil may be used. The composite current collector may include a polymer material base layer and a metal layer formed on at least one surface of the polymer material base layer. The composite current collector may be formed by synthesizing a metal material (copper, copper alloy, nickel, nickel alloy, titanium, titanium alloy, silver and silver alloy, or the like) on a polymer material substrate (such as a substrate of polypropylene (PP), polyethylene glycol terephthalate (PET), polybutylene terephthalate (PBT), polystyrene (PS), polyethylene (PE), or the like), but the present application is not limited to these materials.

In the negative electrode sheet of the present application, the negative film layer usually includes a negative active material, an optional binder, an optional conductive agent and another optional additive, and is usually formed by coating and drying of a negative electrode slurry. The negative electrode slurry is usually formed by dispersing the negative active material, the optional conductive agent and binder and the like in a solvent and stirring uniformly. The solvent may be N-methylpyrrolidone (NMP) or deionized water.

As an example, the conductive agent may be selected from one or more of superconducting carbon, acetylene black, carbon black, Ketjen black, carbon dots, carbon nanotubes, graphene, and carbon nanofibers.

In the negative electrode sheet of the present application, in addition to the negative active material, the negative film layer further optionally includes another common negative active material, for example, artificial graphite, natural graphite, soft carbon, hard carbon, a silicon-based material, a tin-based material, and lithium titanate. The silicon-based material can be selected from one or more of elemental silicon, a silicon-oxygen compound, a silicon-carbon composite, a silicon-nitrogen composite and a silicon alloy. The tin-based material can be selected from one or more of elemental tin, a tin-oxygen compound and a tin alloy.

### [SEPARATOR]

A lithium-ion battery using an electrolytic solution and some lithium-ion batteries using solid electrolytes, further include a separator. The separator is provided between a positive electrode sheet and a negative electrode sheet for separation. The type of the separator is not particularly limited in the present application, and any well-known porous-structure separator with good chemical stability and mechanical stability can be selected. In some implementation manners, the material of the separator may be selected from one or more of glass fiber, nonwoven fabric, polyethylene, polypropylene and polyvinylidene fluoride. The separator may be a single-layered thin film or a multi-layered composite thin film, which is not particularly limited. When the separator is a multi-layered composite thin film, the material of each layer can be the same or different, which is not particularly limited.

### [ELECTROLYTIC SOLUTION]

The present application provides a secondary battery, which includes: a negative electrode sheet, a separator, the positive electrode sheet, and an electrolytic solution, where the electrolytic solution includes a low-impedance additive, and a mass content w% of the low-impedance additive in the electrolytic solution and a mass content β% of the high-oxidizability additive in the positive film layer satisfy 0.1≤w/β≤10, optionally, 2≤w/β≤5.

In some implementation manners, a value of w satisfies 0.01≤w≤10, optionally, 0.5≤w≤5.

In some implementation manners, the low-impedance additive in the electrolytic solution is fluorosulfonate and/or difluorophosphate,
the fluorosulfonate is (FSO₃)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺; and
the difluorophosphate is (F₂PO₂)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺.

The fluorosulfonate or difluorophosphate can oxidize on a surface of a positive electrode prior to a solvent of the electrolytic solution, forming an interface protective film rich in inorganic salts. This film may allow Li⁺ and Mn²⁺ to pass, but can block the passage of the solvent of the electrolytic solution. Therefore, the direct contact between the solvent of the electrolytic solution and the positive material can be inhibited, and oxidative side reactions of the solvent of the electrolytic solution on an interface of the positive electrode can be reduced. Similarly, the fluorosulfonate or difluorophosphat can generate a protective film on the high-oxidizability additive that separates the solvent and allows Mn²⁺ to pass, so that the high-oxidizability additive can only oxidize Mn²⁺ and does not oxidize the solvent in the electrolytic solution, thereby inhibiting the continuous growth of the impedance of the interface of the positive electrode.

Through research, the inventor found that the mutual relation between the mass percentage w% of the low-impedance additive in the electrolytic solution and the mass content of the high-oxidizability additive in the positive film layer greatly affects the low-temperature discharge power and the storage life of the lithium-ion battery. When 0.1≤w/β≤10, it can be ensured that a battery cell has not only high low-temperature discharge power, but also the sufficient storage life, preferably, 0.2≤w/β≤5.

In some implementation manners, an electrolyte salt may be selected from one or more of lithium hexafluorophosphate (LiPF₆), lithium tetrafluoroborate (LiBF₄), lithium perchlorate (LiClO₄), lithium hexafluorarsenate (LiAsF₆), lithium bisfluorosulfonimide (LiFSI), lithium bistrifluoromethanesulfonimidate (LiTFSI), lithium trifluoromethanesulfonate (LiTFS), lithium difluorooxalateborate (LiDFOB), lithium bisoxalateborate (LiBOB), lithium difluorophosphate (LiPO₂F₂), lithium difluorobisoxalate phosphate (LiDFOP) and lithium tetrafluorooxalate phosphate (LiTFOP).

In some implementation manners, the solvent may be selected from one or more of ethylene carbonate (EC), propylene carbonate (PC), ethyl methyl carbonate (EMC), iethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some implementation manners, the electrolytic solution further optionally includes another additive. For example, the additive may include a negative electrode film-forming additive, or may include a positive electrode film-forming additive, or may further include an additive that can improve specific performance of the battery, such as, an additive for improving overcharge performance of the battery, an additive for improving high-temperature performance of the battery, and an additive for improving low-temperature performance of the battery.

### [LITHIUM-ION BATTERY]

In some implementation manners, the positive electrode sheet, the negative electrode sheet and the separator may be subject to a winding process or a lamination process, to obtain an electrode assembly, the electrolytic solution is injected, and a lithium-ion battery product is obtained after at least a chemical conversion process.

In some implementation manners, the lithium-ion battery may include an outer package. The outer package may be used to package the foregoing electrode assembly and electrolytic solution.

In some implementation manners, the outer package of the lithium-ion battery may be a hard shell such as a hard plastic shell, an aluminum shell, or a steel shell. The outer package of the lithium-ion battery may be a soft package, such as a bag-type soft package. A material of the soft package may be plastic, for example, polypropylene (PP), polybutylene terephthalate (PBT), polybutylene succinate (PBS).

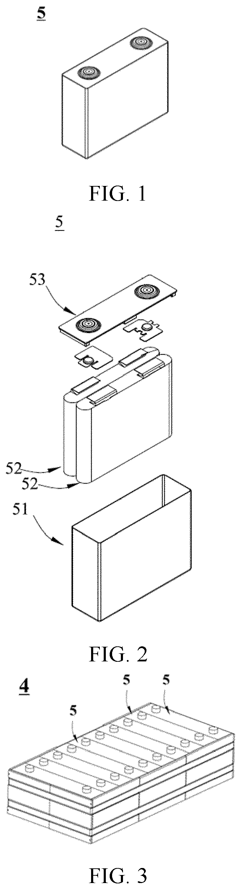

The present application has no particular limitation on the shape of the lithium-ion battery, which may be a cylinder, a square, or any other shape. For example, FIG. 1 is a lithium-ion battery 5 in a square structure as an example.

In some implementation manners, with reference to FIG. 2, the outer package may include a housing 51 and a cover plate 53. The housing 51 may include a bottom plate and side plates connected to the bottom plate. The bottom plate and the side plates are enclosed to form an accommodating cavity. The housing 51 has an opening that is in communication with the accommodating cavity, and the cover plate 53 can cover the opening to close the accommodating cavity. A positive electrode sheet, a negative electrode sheet, and a separator may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the lithium-ion battery 5 may be one or more, which can be selected by persons skilled in the art according to specific needs.

### [BATTERY MODULE]

In some implementation manners, lithium-ion batteries may be assembled into a battery module, the number of lithium-ion batteries included in the battery module may be one or more, and the specific number may be selected by persons skilled in the art according to application and capacity of the battery module.

FIG. 3 is a battery module 4 as an example. With reference to FIG. 3, in the battery module 4, a plurality of lithium-ion batteries 5 may be sequentially arranged along a length direction of the battery module 4. Certainly, they may be arranged in any other manner. Further, the plurality of lithium-ion batteries 5 may be fixed with fasteners.

Optionally, the battery module 4 may further include a shell with an accommodating space, and the plurality of lithium-ion batteries 5 are accommodated in the accommodating space.

### [BATTERY PACK]

In some implementation manners, the foregoing battery modules may be further assembled into a battery pack, and the number of battery modules included in the battery pack may be selected by persons skilled in the art according to application and capacity of the battery pack.

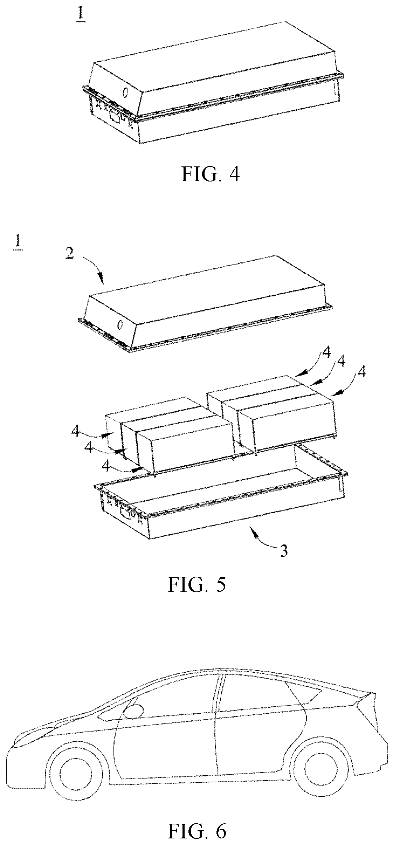

FIG. 4 and FIG. 5 are a battery pack 1 as an example. With reference to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 and form an enclosed space for accommodating the battery modules 4. The plurality of battery modules 4 may be arranged in the battery box in any manner.

### [POWER CONSUMPTION APPARATUS]

In addition, the present application further provides a power consumption apparatus including one or more of the lithium-ion battery, the battery module, or the battery pack provided in the present application. The lithium-ion battery, the battery module, or the battery pack can be used as a power source of the apparatus, or as an energy storage unit of the apparatus. The apparatus may be, but is not limited to, a mobile device (for example, a mobile phone or a notebook computer), an electric vehicle (for example, a full electric vehicle, a hybrid electric vehicle, a plug-in hybrid electric vehicle, an electric bicycle, an electric scooter, an electric golf cart, or an electric truck), an electric train, a ship and satellite, an energy storage system, and the like.

As the power consumption apparatus, a lithium-ion battery, a battery module, or a battery pack may be selected according to usage requirements.

FIG. 6 is an apparatus as an example. The apparatus is a full electric vehicle, a hybrid electric vehicle, a plug-in hybrid electric vehicle, or the like. To meet a requirement of the apparatus for high power and high energy density of a lithium-ion battery, a battery pack or a battery module may be used.

An apparatus as another example may be a mobile phone, a tablet computer, a notebook computer, or the like. The apparatus usually requires lightness and thinness, and a lithium-ion battery may be used as a power source.

### EMBODIMENTS

Embodiments of the present application will be described hereinafter. The embodiments described below are exemplary and merely used to explain the present application, and may not be understood as limitation to the present application. Where specific techniques or conditions are not specified in the embodiments, they are performed according to techniques or conditions described in the literature in the art or according to product specifications. The reagents or instruments used without specifying the manufacturer are conventional products that are commonly used in the art and can be obtained from the market. The content of each component in the embodiments of the present application, unless otherwise specified, is based on mass.

### EMBODIMENTS

### Embodiment 1

### [Positive electrode sheet]

S1, preparation of lithium manganate Li(Mn³⁺)_{(0.981)}(Al³⁺)_{(0.019)}(Mn⁴⁺)₍₁₎O⁴ with α=0.981:

A manganese precursor manganese dioxide (represented as MnO₂), an N precursor aluminum oxide (represented as Al₂O₃), and a lithium precursor lithium carbonate (represented as Li₂CO₃) were mixed in a ratio of molar weights of 1.981mol to 0.0095mol to 0.5mol, and then placed in a muffle furnace for pre-sintering at 400°C for 4 hours after being uniformly ground; they cooled to room temperature and were ground continuously; they were placed again in the muffle furnace for final sintering at 800°C for 15 hours after being ground; and then lithium manganate Li(Mn³⁺)_{(0.981)}(Al³⁺)_{(0.019)}(Mn⁴⁺)₍₁₎O⁴ is obtained after they cooled to room temperature.

The foregoing positive active material of lithium manganate, a high-oxidizability additive Na₂O₂, a conductive agent acetylene black, and a binder polyvinylidene fluoride (PVDF) were dissolved in a solvent N-methylpyrrolidone (NMP) in a mass ratio of 91:3:3:3, and a positive electrode slurry was obtained after they were fully stirred and mixed uniformly; and then, the positive electrode slurry was coated on a positive electrode current collector uniformly, and a positive electrode sheet was obtained after drying, cold pressing, and slitting.

### [Negative electrode sheet]

A negative active material artificial graphite, a conductive agent acetylene black, and a binder styrene-butadiene rubber (SBR) and a thickener sodium carboxymethyl cellulose (CMC-Na) were mixed uniformly in a mass ratio of 90:2:2:1 with deionized water, and coated on cooper foil to obtain a negative electrode sheet in Embodiment 1 after drying and cold pressing.

### [Electrolytic solution]

EC (ethylene carbonate) and EMC (ethyl methyl carbonate) were mixed in a volume ratio of 3:7 under an argon atmosphere, LiPF₆ was added to form an electrolytic solution, and in the electrolytic solution, a mass content of LiPF₆ is 12.5%.

### [Separator]

A polypropylene separator.

### [Production of Lithium-ion Battery]

The positive electrode sheet, the separator, and the negative electrode sheet were stacked in order, so that the separator is located between the positive electrode sheet and the negative electrode sheet for separation; they were packed into an aluminum-plastic film after being wound into a prismatic bare cell, a corresponding non-aqueous electrolytic solution was injected, and it was sealed; and then a lithium-ion battery was obtained after processes of standing, hot and cold pressing, chemical conversion, clamping, grading, and the like.

The specific preparation parameters for lithium-ion batteries in other embodiments and comparative examples are shown in Table A to Table C.

Lithium-ion battery products and performance parameters in other embodiments and comparative examples are shown in Table A to Table C.

### [Related parameter test]

### 1. Ratio α of Mn³⁺ to Mn⁴⁺ in lithium manganate

A lithium-ion battery was discharged at 0.04C until a voltage was 3.0V, and then disassembled to obtain a positive electrode sheet, and the obtained positive electrode sheet was washed with DMC (dimethyl carbonate) and dried. The dried positive electrode sheet is taken, a positive film layer was scraped off with a blade, a test was conducted with reference to "Metallurgical Analysis 027.006(2007):20-23" literature report on "Method of Analyzing valence state of manganese in positive material lithium manganate", and an amount a of Mn³⁺ substances in lithium manganate per gram and an amount b of Mn⁴⁺ substances in lithium manganate per gram can be obtained using complexometry and oxidation reduction, α=a/b.

### 2. Specific capacity of positive material

At 25°C, a lithium-ion battery was charged at a constant current of 1C until a voltage was 4.3V, charged at a constant voltage of 4.3V until a current was less than 0.05C, and then discharged at 0.33C until the voltage was 3V to obtain a discharge capacity Q. The battery was disassembled to obtain a complete positive electrode sheet, the length and width of the positive electrode sheet were measured with a vernier caliper to obtain a surface area of the positive electrode sheet, and then the mass M0 of a positive electrode current collector was obtained by calculation according to surface density of the positive electrode current collector; the mass M1 of the positive electrode sheet was obtained by weighing, and then the mass M of the positive material was (M1-M0); and a specific capacity of the positive material was Q/M.

### 3. Initial internal resistance

At 25°C, a lithium-ion battery was charged at a constant current of 1C until a voltage was 4.3V, charged at a constant voltage of 4.3V until a current was less than 0.05C, and then discharged at 1C for 30 minutes, that is, the power of the lithium-ion battery was adjusted to 50% SOC. Then, positive and negative probes of a TH2523A AC internal resistance tester contacted positive and negative electrodes of the lithium-ion battery, respectively, and an initial internal resistance value was read through a numerical value displayed on the TH2523A AC internal resistance tester.

### 4. Text on deposition amount of Mn in negative electrode

At 25°C, a lithium-ion battery was charged at a constant current of 1C until a voltage was 4.3V, charged at a constant voltage of 4.3V until a current was less than 0.05C, and then discharged at 0.33C until the voltage was 3V to obtain a fully discharged lithium-ion battery. Then, the battery was disassembled, and a negative film layer on a negative electrode current collector was scraped off with a blade to obtain negative powder, the obtained negative powder was digested with nitric acid, and then a test was conducted with reference to EPA 6010D-2014, "Inductively Coupled Plasma-Atomic Emission Spectrometry", to obtain a content of manganese of the negative film layer per mass unit (ppm/g).

### 5. Capacity retention rate for storage for 100 days at 45°C and 3.8V

At 25°C, a lithium-ion battery was charged at a constant current of 1C until a voltage was 4.3V, charged at a constant voltage of 4.3V until a current was less than 0.05C, and then discharged at 0.33C until the voltage was 3V to obtain a discharge capacity Q. Then, the battery was charged again at the constant current of 1C until the voltage was 4.3V, charged at the constant voltage of 4.3V until the current was less than 0.05C, and then discharged at 0.33C until the voltage was 3.8V. Finally, the lithium-ion battery was placed in an oven at 45°C for 100 days.

The lithium-ion battery was taken out after being placed for 100 days, placed at 25°C for 12 hours, charged at the constant current of 1C until the voltage was 4.3V, charged at the constant voltage of 4.3 until the current was less than 0.05C, and then discharged at 0.33C until the voltage was 3V to obtain a discharge capacity Q₁₀₀. A capacity retention rate for storage for 100 days at 45°C and 3.8V was Q/Q₁₀₀×100%.

### 5. Internal resistance growth rate of battery after storage

At 25°C, the foregoing lithium-ion battery after storage for 100 days at 45°C was charged at a constant current of 1C until a voltage was 4.3V, charged at a constant voltage 4.3V until a current was less than 0.05 to obtain a discharge capacity Q1 Ah, and then discharged at a current of Q1 A for 30 minutes, that is, the power of the lithium-ion battery was adjusted to 50% SOC. Then, positive and negative probes of a TH2523A AC internal resistance tester contacted positive and negative electrodes of the battery, respectively, and an internal resistance value after battery storage was read through data of the TH2523A AC internal resistance tester. An internal resistance growth rate of storage after storage=(internal resistance of battery after storage-initial internal resistance of battery)/initial internal resistance of battery×100%.

**Table A: Process parameter table for lithium-ion battery production in various embodiments and comparative examples**

| Sequence number | Positive film layer | | | | | | | | Electrolytic solution | |
|---|---|---|---|---|---|---|---|---|---|---|
| | Manganese precursor | | N precursor | | Lithium precursor | | High-oxidizability additive | | Low-impedance additive | |
| | Type | Dosage/mol | Type | Dosage/mol | Type | Dosage/mol | Type | Dosage/% | Type | Mass content % |
| S1 | MnO₂ | 1.981 | Al₂O₃ | 0.0095 | Li₂CO₃ | 0.5 | Na₂O₂ | 3 | FSO₃Li | 3 |
| S2 | MnO₂ | 1.981 | Al₂O₃ | 0.0095 | Li₂CO₃ | 0.5 | CrO₃ | 3 | FSO₃Li | 3 |
| S3 | MnO₂ | 1.981 | Al₂O₃ | 0.0095 | Li₂CO₃ | 0.5 | V₂O₅ | 3 | FSO₃Li | 3 |
| S4 | MnO₂ | 1.981 | Al₂O₃ | 0.0095 | Li₂CO₃ | 0.5 | Li₂NiO₂ | 3 | FSO₃Li | 3 |
| S5 | MnO₂ | 1.981 | Al₂O₃ | 0.0095 | Li₂CO₃ | 0.5 | NiO₂ | 3 | FSO₃Li | 3 |
| S6 | MnO₂ | 1.981 | Al₂O₃ | 0.0095 | Li₂CO₃ | 0.5 | Na₂NiFe_{0.2}O₂ | 3 | FSO₃Li | 3 |
| S7 | MnO₂ | 1.981 | Al₂O₃ | 0.0095 | Li₂CO₃ | 0.5 | Li₂NiO₂ | 3 | / | / |
| D1 | MnO₂ | 1.981 | Al₂O₃ | 0.0095 | Li₂CO₃ | 0.5 | / | / | FSO₃Li | 3 |

**Table 1: Lithium-ion battery product and performance parameter table in various embodiments and comparative examples**

| Seque nce numb er | Positive film layer | | | | | | | Electrolyti c solution | | Battery performance | | | | |
|---|---|---|---|---|---|---|---|---|---|---|---|---|---|---|
| | Lithium manganate | | | | High-oxidizability additive | | | Low-impedance additive | | Spec ific capa city of posit ive mate rial | Conte nt of manga nese of positiv e film layer per mass unit (ppm/ g) | Initial intern al resist ance (mQ) | Capa city reten tion rate for stora ge for 100 days at 45°C and 3.8V (%) | Intern al resist ance growt h rate of batter y after storag e (%) |
| | Structural formula Li(Mn³⁺)₍ₐ₎(Al³⁺)_{(c)}(M n⁴⁺)_{(b)}O₄ | a/ mo 1 | b/ mo 1 | α= a/b | Type | β/ % | β/ α | Typ e | w/ % | | | | | |
| S1 | Li(Mn³⁺)_{(0.981)}(Al³⁺)_{(0.0 19)}(Mn4⁺)₍₁₎O₄ | 0.9 81 | 1 | 0.9 81 | Na₂O₂ | 3 | 3. 06 | FSO ₃Li | 3 | 124 | 51 | 0.389 | 0.9 | 0.35 |
| S2 | Li(Mn³⁺)_{(0.981)}(Al³⁺)_{(0.0 19)}(Mn⁴⁺)₍₁₎O₄ | 0.9 81 | 1 | 0.9 81 | CrO₃ | 3 | 3. 06 | FSO ₃Li | 3 | 126 | 46 | 0.391 | 0.92 | 0.32 |
| S3 | Li(Mn³⁺)_{(0.981)}(Al³⁺)_{(0.0 19)}(Mn4⁺)₍₁₎O₄ | 0.9 81 | 1 | 0.9 81 | V₂O₅ | 3 | 3. 06 | FSO ₃Li | 3 | 124 | 57 | 0.393 | 0.91 | 0.31 |
| S4 | Li(Mn³⁺)_{(0.981)}(Al³⁺)_{(0.0 19)}(Mn4⁺)₍₁₎O₄ | 0.9 81 | 1 | 0.9 81 | Li₂NiO₂ | 3 | 3. 06 | FSO ₃Li | 3 | 125 | 48 | 0.392 | 0.92 | 0.3 |
| S5 | Li(Mn³⁺)_{(0.981)}(Al³⁺)_{(0.0 19)}(Mn4⁺)₍₁₎O₄ | 0.9 81 | 1 | 0.9 81 | NiO₂ | 3 | 3. 06 | FSO ₃Li | 3 | 126 | 49 | 0.391 | 0.93 | 0.34 |
| S6 | Li(Mn³⁺)_{(0.981)}(Al³⁺)_{(0.0 19)}(Mn4⁺)₍₁₎O₄ | 0.9 81 | 1 | 0.9 81 | Na₂Ni_{0.8}F e_{0.2}O₂ | 3 | 3. 06 | FSO ₃Li | 3 | 123 | 55 | 0.388 | 0.89 | 0.33 |
| S7 | Li(Mn³⁺)_{(0.981)}(Al³⁺)_{(0.0 19)}(Mn⁴⁺)₍₁₎O₄ | 0.9 81 | 1 | 0.9 81 | Li₂NiO₂ | 3 | 3. 06 | / | / | 125 | 47 | 0.352 | 0.9 | 0.75 |
| D1 | Li(Mn³⁺)_{(0.981)}(Al³⁺)_{(0.0 19)}(Mn4⁺)₍₁₎O₄ | 0.9 81 | 1 | 0.9 81 | / | / | / | FSO ₃Li | 3 | 129 | 652 | 0.348 | 0.68 | 0.25 |

### Brief data analysis for Table 1:

In Embodiments S1-S6, compared with Comparative Example D1 without addition of a high-oxidizability additive, by introducing a high-oxidizability additive, such as Na₂O₂, CrO₃, V₂O₅, Li₂NiO₂ or NiO₂, in a lithium manganate positive film layer, a capacity retention rate for storage for 100 days at 45°C and 3.8V can be significantly increased. The main reason is that the high-oxidizability additive can oxidize Mn²⁺ to Mn⁴⁺ that is insoluble in an electrolytic solution, and in this way, a large amount of Mn may not migrate from a positive electrode to a negative electrode for deposition, which significantly mitigates the damage of Mn to the negative electrode.

According to performance test results of S4 and S7, it is possible to oxidize an electrolytic solution by a high-oxidizability additive, and if no improvement measure is introduced, it results in an increase in internal resistance during storage. Therefore, in S7, the internal resistance of the battery after storage is great due to no addition of FSO₃Li. However, for the lithium-ion battery in S4 that is added with a low-impedance additive FSO₃Li, the internal resistance is significantly reduced.

**Table B: Process parameter table for lithium-ion battery production in various embodiments and comparative examples**

| Sequence number | Positive film layer | | | | | | | | Electrolytic solution | |
|---|---|---|---|---|---|---|---|---|---|---|
| | Manganese precursor | | N precursor | | Lithium precursor | | High-oxidizability additive | | Low-impedance additive | |
| | Type | Dosage/mol | Type | Dosage/mol | Type | Dosage/mol | Type | Dosage/% | Type | Mass content % |
| S4 | MnO₂ | 1.981 | Al₂O₃ | 0.0095 | Li₂CO₃ | 0.5 | Li₂NiO₂ | 3.00 | FSO₃Li | 3 |
| S8 | MnO₂ | 2.023 | / | / | Li₂CO₃ | 0.5 | Li₂NiO₂ | 0.01 | FSO₃Li | 3 |
| S9 | MnO₂ | 1.980 | / | / | Li₂CO₃ | 0.5 | Li₂NiO₂ | 0.11 | FSO₃Li | 3 |
| S10 | MnO₂ | 1.981 | Al₂O₃ | 0.0095 | Li₂CO₃ | 0.5 | Li₂NiO₂ | 0.49 | FSO₃Li | 3 |
| S11 | MnO₂ | 1.704 | Al₂O₃ | 0.1478 | Li₂CO₃ | 0.5 | Li₂NiO₂ | 3.52 | FSO₃Li | 3 |
| S12 | MnO₂ | 1.638 | Al₂O₃ | 0.1808 | Li₂CO₃ | 0.5 | Li₂NiO₂ | 6.38 | FSO₃Li | 3 |
| S13 | MnO₂ | 1.495 | Al₂O₃ | 0.2525 | Li₂CO₃ | 0.5 | Li₂NiO₂ | 5.94 | FSO₃Li | 3 |

**Table 2: Lithium-ion battery product and performance parameter table in various embodiments and comparative examples**

| Seque nce numb er | Positive film layer | | | | | | | Electrolyt ic solution | | Battery performance | | | | |
|---|---|---|---|---|---|---|---|---|---|---|---|---|---|---|
| | Lithium manganate | | | | High-oxidizability additive | | | Low-impedanc e additive | | Specif ic capaci ty of positiv e materi al | Conte nt of manga nese of positiv e electro de per mass unit (ppm/ g) | Initial interna 1 resista nce (mΩ) | Capaci ty retenti on rate for storag e for 100 days at 45°C and 3.8V (%) | Interna l resistan ce growth rate of battery after storage (%) |
| | Structural formula Li(Mn³⁺)₍ₐ₎(Al³⁺)_{(c)} (Mn⁴⁺)_{(b)}O₄ | a/m ol | b/m ol | α=a /b | Type | β/ % | β/ α | Typ e | w/ % | | | | | |
| S4 | Li(Mn³⁺)_{(0.981)}(Al³⁺ )_{(0.019)}(Mn⁴⁺)₍₁₎O₄ | 0.9 81 | 1 | 0.9 81 | Li₂Ni O₂ | 3 | 3. 06 | FS O₃ Li | 3 | 125 | 48 | 0.392 | 0.92 | 0.3 |
| S8 | Li_{(1.13)}(Mn³⁺)_{(1.072)}( Mn⁴⁺)_{(0.951)}O₄ | 1.0 72 | 0.9 51 | 1.1 72 | Li₂Ni O₂ | 0. 01 | **0. 01** | FS O₃ Li | 3 | 139 | 510 | 0.341 | 0.43 | 0.25 |
| S9 | Li_{(1.1)}(Mn³⁺)_{(1.024)}( Mn⁴⁺)_{(0.956)}O₄ | 1.0 24 | 0.9 56 | 1.0 72 | Li₂Ni O₂ | 0. 11 | 0. 1 | FS O₃ Li | 3 | 136 | 430 | 0.358 | 0.62 | 0.26 |
| S10 | Li(Mn³⁺)_{(0.981)}(Al³⁺ )_{(0.019)}(Mn⁴⁺)₍₁₎O₄ | 0.9 81 | 1 | 0.9 81 | Li₂Ni O₂ | 0. 49 | **0. 5** | FS O₃ Li | 3 | 127 | 115 | 0.364 | 0.9 | 0.28 |
| S11 | Li₍₁₎(Mn³⁺)_{(0.704)}(A l³⁺)_{(0.296)}(Mn⁴⁺)₍₁₎O ₄ | 0.7 04 | 1 | 0.7 04 | Li₂Ni O₂ | 3. 52 | **5** | FS O₃ Li | 3 | 111 | 41 | 0.412 | 0.94 | 0.32 |
| S12 | Li₍₁₎(Mn3⁺)_{(0.638)}(A l³⁺)_{(0.362)}(Mn⁴⁺)₍₁₎O ₄ | 0.6 38 | 1 | 0.6 38 | Li₂Ni O₂ | 6. 38 | **10** | FS O₃ Li | 3 | 95 | 35 | 0.455 | 0.96 | 0.45 |
| S13 | Li₍₁₎(Mn³⁺)_{(0 495)}(A l³⁺)_{(0.505)}(Mn⁴⁺)₍₁₎O ₄ | 0.4 95 | 1 | 0.4 95 | Li₂Ni O₂ | 5. 94 | **12** | FS O₃ Li | 3 | 81 | 32 | 0.451 | 0.96 | 0.61 |

### Brief data analysis for Table 2:

As shown in Embodiments S4 and S8-S13, by adjusting a dosage of Li and a doping amount of Al, samples with different contents of Mn³⁺ are obtained. By practically testing ratios α of Mn³⁺ to Mn⁴⁺ of these materials and specific capacities of positive materials of these materials, it can be found that the greater the ratio α of Mn³⁺ to Mn⁴⁺, the higher the corresponding specific capacity of the positive material, and the reason is that delithiation and lithiation depend on a change of a valence state of Mn³⁺. In order to obtain a lithium manganate material with a high specific capacity, a ratio α of Mn³⁺ to Mn⁴⁺ in a high-capacity lithium manganate active material in a positive film layer satisfies 0.5≤α≤1.2, preferably, 0.6≤α ≤1.1. However, the higher the capacity, the lower the capacity retention rate for storage for 100 days at 45°C and 3.8V, and the poorer the storage life. The reason is that the high-capacity material includes more Mn³⁺, and Mn³⁺ undergoes a disproportionation reaction to generate soluble Mn²⁺, and Mn²⁺ further migrates to a negative electrode to destroy a negative SEI film, finally resulting in the poor storage life. Therefore, a pure lithium manganate material cannot take into account long life and high energy density at a high temperature.

The introduction of a high-oxidizability additive in the positive electrode sheet can significantly increase the storage life of the lithium manganate material. These high-oxidizability additives may directly oxidize the soluble Mn²⁺ formed by disproportionation to insoluble Mn⁴⁺, which inhibits the damage of Mn²⁺ to the negative electrode, thereby increasing the storage life of lithium manganate. However, these types of additives for the electrode sheet have no capacity contribution at 3-4.3V and have poor conductivity, and the capacity and initial internal resistance may deteriorate due to excessive addition of them, for example, in Embodiments S11-S13. Therefore, a mass proportion β(%) of an additive containing Ni⁴⁺ satisfies 0.01≤β≤10, preferably, 0.5≤β≤5.

In addition, the greater the ratio α of Mn³⁺ to Mn⁴⁺, the higher the capacity, the more Mn²⁺ generated by the disproportionation reaction, and the more Ni⁴⁺-containing additive for the electrode sheet is needed, that is, the greater β needs to be. However, the greater β, the worse the capacity and initial internal resistance. Therefore, in order to take into account the high energy density, long storage life and appropriate initial internal resistance, the ratio α of Mn³⁺ to Mn⁴⁺ and the mass proportion β(%) of the Ni⁴⁺-containing additive satisfy: 0.01<β/α<10, preferably, 0.5≤β/α≤5. When β/α is small, the storage life becomes poor, as in Embodiment S8. When β/α is great, the energy density of the positive electrode decreases, and the initial internal resistance increases, as in Embodiment S13.

**Table C: Process parameter table for lithium-ion battery production in various embodiments and comparative examples**

| Sequence number | Positive film layer | | | | | | | | Electrolytic solution | |
|---|---|---|---|---|---|---|---|---|---|---|
| | Manganese precursor | | N precursor | | Lithium precursor | | High-oxidizability additive | | Low-impedance additive | |
| | Type | Dosage/mol | Type | Dosage/mol | Type | Dosage/mol | Type | Dosage/% | Type | Mass content % |
| S4 | MnO₂ | 1.981 | Al₂O₃ | 0.0095 | Li₂CO₃ | 0.5 | Li₂NiO₂ | 3 | FSO₃Li | 1 |
| S14 | MnO₂ | 1.981 | Al₂O₃ | 0.0095 | Li₂CO₃ | 0.5 | Li₂NiO₂ | 3 | FSO₃Li | 0.03 |
| S15 | MnO₂ | 1.981 | Al₂O₃ | 0.0095 | Li₂CO₃ | 0.5 | Li₂NiO₂ | 3 | FSO₃Li | 0.3 |
| S16 | MnO₂ | 1.981 | Al₂O₃ | 0.0095 | Li₂CO₃ | 0.5 | Li₂NiO₂ | 3 | FSO₃Li | 1.5 |
| S17 | MnO₂ | 1.981 | Al₂O₃ | 0.0095 | Li₂CO₃ | 0.5 | Li₂NiO₂ | 3 | FSO₃Li | 7.5 |
| S18 | MnO₂ | 1.981 | Al₂O₃ | 0.0095 | Li₂CO₃ | 0.5 | Li₂NiO₂ | 3 | FSO₃Li | 15 |
| S19 | MnO₂ | 1.981 | Al₂O₃ | 0.0095 | Li₂CO₃ | 0.5 | Li₂NiO₂ | 3 | FSO₃Li | 30 |
| S20 | MnO₂ | 1.981 | Al₂O₃ | 0.0095 | Li₂CO₃ | 0.5 | Li₂NiO₂ | 3 | FSO₃Li | 33 |
| S21 | MnO₂ | 1.981 | Al₂O₃ | 0.0095 | Li₂CO₃ | 0.5 | Li₂NiO₂ | 3 | FSO₃Li | 0.015 |
| S22 | MnO₂ | 1.981 | Al₂O₃ | 0.0095 | Li₂CO₃ | 0.5 | Li₂NiO₂ | 3 | F₂PO₂Li | 1 |

**Table 3: Lithium-ion battery product and performance parameter table in various embodiments and comparative examples**

| Sequ ence numb er | Positive film layer | | | | | | | Electrolytic solution | | | Battery performance | | | | |
|---|---|---|---|---|---|---|---|---|---|---|---|---|---|---|---|
| | Lithium manganate | | | | High-oxidizability additive | | | Low-impedance additive | | | Spec ific capa city of posit ive mate rial | Conte nt of manga nese of positiv e electro de per mass unit (ppm/ g) | Initial intern al resist ance (mQ) | Capa city reten tion rate for stora ge for 100 days at 45°C and 3.8V (%) | Intern al resist ance growt h rate of batter y after storag e (%) |
| | Structural formula Li(Mn³⁺)₍ₐ₎(Al³⁺)_{(c)}(M n⁴⁺)_{(b)}O₄ | a/ mo 1 | b/ mo 1 | α= a/b | Type | β/ % | β/ α | Type | w/ % | w/ β | | | | | |
| S4 | Li(Mn³⁺)_{(0.981)}(Al³⁺)_{(0.0 19)}(Mn⁴⁺)₍₁₎O₄ | 0.9 81 | 1 | 0.9 81 | Li₂N iO₂ | 3 | 3. 06 | FSO ₃Li | 1 | 0.3 3 | 125 | 49 | 0.387 | 0.91 | 0.32 |
| S14 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 0.0 3 | 0.0 1 | 125 | 50 | 0.379 | 0.9 | 0.48 |
| S15 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 0.3 | 0.1 | 125 | 52 | 0.382 | 0.91 | 0.41 |
| S16 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 1.5 | 0.5 | 125 | 51 | 0.395 | 0.91 | 0.31 |
| S17 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 7.5 | 2.5 | 125 | 48 | 0.589 | 0.9 | 0.25 |
| S18 | Li(Mn³⁺)_{(0.981)}(Al³⁺)_{(0.0 19)}(Mn⁴⁺)₍₁₎O₄ | 0.9 81 | 1 | 0.9 81 | Li₂N iO₂ | 3 | 3. 06 | FSO ₃Li | 15 | 5 | 125 | 47 | 0.775 | 0.91 | 0.24 |
| S19 | Li(Mn³⁺)_{(0 981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 30 | 10 | 125 | 50 | 0.875 | 0.91 | 0.23 |
| S20 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 33 | 11 | 125 | 52 | 0.898 | 0.91 | 0.23 |
| S21 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | FSO ₃Li | 0.0 15 | 0.0 05 | 125 | 51 | 0.375 | 0.89 | 0.52 |
| S22 | Li(Mn³⁺)_{(0.981)}(Al³⁺)_{(0.0 19)}(Mn4⁺)₍₁₎O₄ | 0.9 81 | 1 | 0.9 81 | Li₂N iO₂ | 3 | 3. 06 | F₂P O₂Li | 1 | 0.3 3 | 125 | 50 | 0.385 | 0.9 | 0.33 |

### Brief data analysis for Table 3:

In Embodiment S7, the introduction of a high-oxidizability additive may increase a growth rate of an internal resistance of a battery cell after storage, which is bad for practical application of the battery cell, and may lead to insufficient power in the later period of the battery life, resulting in poor driving experience. However, the main problem is that this high-oxidizability additive for the electrode sheet may oxidize not only Mn²⁺ but also an electrolytic solution, leading to continuous thickening of by-products on an interface of a positive electrode and a continuous increase of the internal resistance of the battery cell during storage.

In Embodiments S4 and S14-S22, the introduction of an additive fluorosulfonate or difluorophosphate for improving the impedance growth can effectively inhibit the growth of storage internal resistance. The fluorosulfonate or difluorophosphate can oxidize on a surface of a positive electrode prior to a solvent of the electrolytic solution, forming an interface protective film rich in inorganic salts. This film may allow Li⁺ and Mn²⁺ to pass, but can block the passage of the solvent of the electrolytic solution. Therefore, the direct contact between the solvent of the electrolytic solution and the positive material can be inhibited, and oxidative side reactions of the solvent of the electrolytic solution on an interface of the positive electrode can be reduced. Similarly, the fluorosulfonate or difluorophosphat can generate a protective film on the high-oxidizability additive that separates the solvent and allows Mn²⁺ to pass, so that it is achieved that Ni⁴⁺ only oxidizes Mn²⁺ and does not oxidize the solvent in the electrolytic solution, thereby inhibiting the continuous growth of the impedance of the interface of the positive electrode. However, through the practical research, it is found that addition of excessive fluorosulfonate or difluorophosphat to the electrolytic solution may increase viscosity of the electrolytic solution and conductivity of the electrolytic solution deteriorates, leading to an increase of the internal resistance of the battery cell. Therefore, a mass proportion w(%) of the additive improving the impedance growth in the electrolytic solution satisfies 0.01≤w≤10, preferably, 0.5≤w≤5.

In addition, the greater the dosage β of the high-oxidizability additive for the electrode sheet, the stronger the capability of oxidizing the electrolytic solution, the greater the risk of deterioration of the storage internal resistance, and the more the additive for improving the impedance growth are needed, to inhibit the growth of the storage internal resistance, that is, w is greater. However, the greater w is, the viscosity and the conductivity of the electrolytic solution may deteriorate, resulting in an increase of an initial internal resistance of the battery cell. Therefore, in order to take into account low initial internal resistance and a low storage internal resistance growth rate, a mass proportion w(%) of an additive for improving low-temperature impedance in the electrolytic solution and the mass proportion β of the high-oxidizability addition satisfy: 0.1≤w/β≤10, preferably, 0.2≤w/β≤ 5.

## Claims

1. A secondary battery, comprising:
a negative electrode sheet, a separator, a positive electrode sheet, wherein the positive electrode sheet
comprising:
a current collector and a positive film layer provided on at least one surface of the current collector, the positive film layer comprising a lithium manganese oxide in which a trivalent manganese element and a tetravalent manganese element coexist and a high-oxidizability additive, and the high-oxidizability additive being used to oxidize Mn²⁺ to Mn³⁺ and/or Mn⁴⁺;
wherein
a structural formula of the lithium manganese oxide is Li_{8-3a-4b-3c}(Mn³⁺)ₐ(N³⁺)_{c}(Mn⁴⁺)_{b}O₄, c≥0, a>0, b>0, N is selected from one or more of B, Al, Ga, In, Ti and Fe, and a ratio of an atom number of the trivalent manganese element to an atom number of the tetravalent manganese element is α;
a mass content of the high-oxidizability additive in the positive film layer is β%;
the α and the β satisfy 0.01≤β/α≤10, optionally, 0.5≤β/α≤5; and
the high-oxidizability additive is one or more of Li₂O₂, Na₂O₂, K₂O₂, CrO₃, V₂O₅ and NiO₂; or the high-oxidizability additive is L₂NiO₂; or the high-oxidizability additive is a composite metal oxide formed by doping an element M into the L₂NiO₂, M being one or more of Cu, Fe, Co and Ni, L being one or more of Li, Na and K, and a valence of the Ni being +2;
and an electrolytic solution, wherein the electrolytic solution includes a low-impedance additive, and a mass content w% of the low-impedance additive in the electrolytic solution and a mass content β% of the high-oxidizability additive in the positive film layer satisfy 0.1≤w/β≤10, optionally, 2≤w/β≤5;
wherein
the low-impedance additive is fluorosulfonate and/or difluorophosphate,
the fluorosulfonate is (FSO₃)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺; and
the difluorophosphate is (F₂PO₂)_{y}M^{y+}, and M^{y+} is one or more of Li⁺, Na⁺, K⁺, Rb⁺, Cs⁺, Mg²⁺, Ca²⁺, Ba²⁺, Al³⁺, Fe²⁺, Fe³⁺, Ni²⁺ and Ni³⁺.

2. The secondary battery according to claim 1, wherein
the α satisfies 0.5≤ α ≤ 1.2, optionally, 0.6≤ α ≤1.

3. The secondary battery according to claim 1 or 2, wherein
the β satisfies 0.01≤ β ≤10, optionally, 0.5≤ β ≤5.

4. The secondary battery according to any of claims 1-3, wherein
0.01≤w≤10, optionally, 0.5≤w≤5.

5. A battery module, comprising the secondary battery according to any of claims 1-4.

6. A battery pack, comprising one or more of the secondary batteries according to any of claims 1-4 or the battery module according to claim 5.

7. A power consumption apparatus, comprising
one or more of the secondary batteries according to any of claims 1-4, the battery module according to claim 5, or the battery pack according to claim 6, the second battery or the battery module or the battery pack being used as a power source of the power consumption apparatus or an energy storage unit of the power consumption apparatus.

## Patentansprüche

1. Sekundärbatterie, umfassend:
eine Negativelektrodenfolie, einen Separator, eine Positivelektrodenfolie, wobei die Positivelektrodenfolie
Folgendes umfasst:
einen Stromabnehmer und eine Positivfilmschicht, die auf mindestens einer Oberfläche des Stromabnehmers bereitgestellt ist, wobei die Positivfilmschicht ein Lithiummanganoxid, in dem ein dreiwertiges Manganelement und ein vierwertiges Manganelement koexistieren, und ein Additiv mit hoher Oxidierbarkeit umfasst und das Additiv mit hoher Oxidierbarkeit verwendet wird, um Mn²⁺ zu Mn³⁺ und/oder Mn⁴⁺ zu oxidieren;
wobei
eine Strukturformel des Lithiummanganoxids Li_{8-3a-4b-3c}(Mn³⁺)ₐ(N³⁺)_{c}(Mn⁴⁺)_{b}O₄ ist, c ≥ 0, a > 0, b > 0, N aus einem oder mehreren von B, Al, Ga, In, Ti und Fe ausgewählt ist und ein Verhältnis einer Ordnungszahl des dreiwertigen Manganelements zu einer Ordnungszahl des vierwertigen Manganelements α ist;
ein Massengehalt des Additivs mit hoher Oxidierbarkeit in der Positivfilmschicht β% ist;
das α und das β 0,01 ≤ β/α ≤ 10, gegebenenfalls 0,5 ≤ β/α ≤ 5, erfüllen; und
es sich bei dem Additiv mit hoher Oxidierbarkeit um eines oder mehrere von Li₂O₂, Na₂O₂, K₂O₂, CrO₃, V₂O₅ und NiO₂ handelt; oder es sich bei dem Additiv mit hoher Oxidierbarkeit um L₂NiO₂ handelt; oder es sich bei dem Additiv mit hoher Oxidierbarkeit um ein Verbundmetall handelt, das durch Dotieren eines Elements M in das L₂NiO₂ gebildet wird, wobei M für eines oder mehrere von Cu, Fe, Co und Ni steht, wobei L für eines oder mehrere von Li, Na und K steht und eine Valenz des Ni +2 ist;
und eine elektrolytische Lösung, wobei die elektrolytische Lösung ein Additiv mit niedriger Impedanz umfasst und ein Massengehalt w% des Additivs mit niedriger Impedanz in der elektrolytischen Lösung und ein Massengehalt β% des Additivs mit hoher Oxidierbarkeit in der Positivfilmschicht 0,1 ≤ w/β ≤ 10, gegebenenfalls 2 ≤ w/β ≤ 5, erfüllen;
wobei
es sich bei dem Additiv mit niedriger Impedanz um Fluorsulfonat und/oder Difluorphosphat handelt,
das Fluorsulfonat (FSO₃)_{y}M^{y+} ist und M^{y+} für eines oder mehrere von Li⁺, Na⁺, K⁺, Rb⁺, Cs⁺, Mg²⁺, Ca²⁺, Ba²⁺, Al³⁺, Fe²⁺, Fe³⁺, Ni²⁺ und Ni³⁺ steht; und
das Difluorphosphat (F₂PO₂)_{y}M^{y+} ist und M^{y+} für eines oder mehrere von Li⁺, Na⁺, K⁺, Rb⁺, Cs⁺, Mg²⁺, Ca²⁺, Ba²⁺, Al³⁺, Fe²⁺, Fe³⁺, Ni²⁺ und Ni³⁺ steht.

2. Sekundärbatterie nach Anspruch 1, wobei
das α 0,5 ≤ α ≤ 1,2, gegebenenfalls 0,6 ≤ α ≤ 1, erfüllt.

3. Sekundärbatterie nach Anspruch 1 oder 2, wobei
das β 0,01 ≤ β ≤ 10, gegebenenfalls 0,5 ≤ β ≤ 5, erfüllt.

4. Sekundärbatterie nach einem der Ansprüche 1-3, wobei
0,01 ≤ w ≤ 10, gegebenenfalls 0,5 ≤ w ≤ 5.

5. Batteriemodul, umfassend die Sekundärbatterie nach einem der Ansprüche 1-4.

6. Batteriepack, umfassend eine oder mehrere der Sekundärbatterien nach einem der Ansprüche 1-4 oder das Batteriemodul nach Anspruch 5.

7. Stromverbrauchsvorrichtung, umfassend
eine oder mehrere der Sekundärbatterien nach einem der Ansprüche 1-4, das Batteriemodul nach Anspruch 5 oder das Batteriepack nach Anspruch 6, wobei die Sekundärbatterie oder das Batteriemodul oder das Batteriepack als Stromquelle der Stromverbrauchsvorrichtung oder Energiespeichereinheit der Stromverbrauchsvorrichtung verwendet wird.

## Revendications

1. Batterie rechargeable, comprenant :
une feuille d'électrode négative, un séparateur, une feuille d'électrode positive, la feuille d'électrode positive
comprenant :
un collecteur de courant et une couche de film positive disposée sur au moins une surface du collecteur de courant, la couche de film positive comprenant un oxyde de lithium et de manganèse dans lequel du manganèse élémentaire trivalent et du manganèse élémentaire tétravalent coexistent et un additif à forte oxydabilité, et l'additif à forte oxydabilité étant utilisé pour oxyder Mn²⁺ en Mn³⁺ et/ou Mn⁴⁺ ;
dans laquelle
une formule structurale de l'oxyde de lithium et de manganèse est Li_{8-3a-4b-3c}(Mn³⁺)ₐ(N³⁺)_{c}(Mn⁴⁺)_{b}O₄, c ≥ 0, a > 0, b > 0, N est choisi parmi un ou plusieurs des éléments B, Al, Ga, In, Ti et Fe, et un rapport entre un nombre d'atomes du manganèse élémentaire trivalent et un nombre d'atomes du manganèse élémentaire tétravalent est α ;
une teneur massique de l'additif à forte oxydabilité dans la couche de film positive est β % ;
α et β satisfont 0,01 ≤ β/α ≤ 10, éventuellement 0,5 ≤ β/α ≤ 5 ; et
l'additif à forte oxydabilité est un ou plusieurs des composés Li₂O₂, Na₂O₂, K₂O₂, CrO₃, V₂O₅ et NiO₂ ; ou bien l'additif à forte oxydabilité est L₂NiO₂ ; ou bien l'additif à forte oxydabilité est un oxyde métallique composite formé par dopage avec un élément M de L₂NiO₂, M étant un ou plusieurs des éléments Cu, Fe, Co et Ni, L étant un ou plusieurs des éléments Li, Na et K, et une valence de Ni étant +2 ;
et une solution électrolytique, la solution électrolytique comportant un additif à faible impédance, et une teneur massique w % de l'additif à faible impédance dans la solution électrolytique et une teneur massique β % de l'additif à forte oxydabilité dans la couche de film positive satisfaisant 0,1 ≤ w/β ≤ 10, éventuellement 2 ≤ w/β ≤ 5 ;
dans laquelle
l'additif à faible impédance est un fluorosulfonate et/ou un difluorophosphate,
le fluorosulfonate est (FSO₃)_{y}M^{y+}, et M^{y+} est un ou plusieurs des ions Li⁺, Na⁺, K⁺, Rb⁺, Cs⁺, Mg²⁺, Ca²⁺, Ba²⁺, Al³⁺, Fe²⁺, Fe³⁺, Ni²⁺ et Ni³⁺ ; et
le difluorophosphate est (F₂PO₂)_{y}M^{y+}, et M^{y+} est un ou plusieurs des ions Li⁺, Na⁺, K⁺, Rb⁺, Cs⁺, Mg²⁺, Ca²⁺, Ba²⁺, Al³⁺, Fe²⁺, Fe³⁺, Ni²⁺ et Ni³⁺.

2. Batterie rechargeable selon la revendication 1, dans laquelle
α satisfait 0,5 ≤ α ≤ 1,2, éventuellement 0,6 ≤ α ≤ 1.

3. Batterie rechargeable selon la revendication 1 ou 2, dans laquelle
β satisfait 0,01 ≤ β ≤ 10, éventuellement 0,5 ≤ β ≤ 5.

4. Batterie rechargeable selon l'une quelconque des revendications 1 à 3, dans laquelle
0,01 ≤ w ≤ 10, éventuellement 0,5 ≤ w ≤ 5.

5. Module de batterie, comprenant la batterie rechargeable selon l'une quelconque des revendications 1 à 4.

6. Bloc-batterie, comprenant une ou plusieurs des batteries rechargeables selon l'une quelconque des revendications 1 à 4 ou le module de batterie selon la revendication 5.

7. Appareil consommant de l'électricité, comprenant
une ou plusieurs des batteries rechargeables selon l'une quelconque des revendications 1 à 4, le module de batterie selon la revendication 5 ou le bloc-batterie selon la revendication 6, la batterie rechargeable ou le module de batterie ou le bloc-batterie étant utilisé comme source d'électricité de l'appareil consommant de l'électricité ou une unité de stockage d'énergie de l'appareil consommant de l'électricité.
